# EUROPEAN PATENT SPECIFICATION

(11) **EP 4 393 800 B1**
(45) Date of publication and mention of the grant of the patent: **21.01.2026**
(21) Application number: 23213595.4
(22) Date of filing: 01.12.2023
(51) Int. Cl.: B62J 9/12, B62K 19/46

(54) **STRADDLED VEHICLE**
GRÄTSCHSITZFAHRZEUG
VÉHICULE À SELLE

(30) Priority: 27.12.2022 JP 2022210590
(43) Date of publication of application: 03.07.2024
(73) Proprietor: Yamaha Hatsudoki Kabushiki Kaisha, Iwata-shi, Shizuoka 438-8501 (JP); Nifco Inc., Yokosuka-shi, Kanagawa 239-8560 (JP)
(72) Inventor: SHINOHARA, Shoya, Iwata-shi 4388501 (JP); NAOI, Hajime, Yokosuka-shi 2398560 (JP)
(74) Representative: Studio Torta S.p.A.

(56) References cited:
- DE-A1- 102019 132 454
- US-A- 5 303 795
- US-A1- 2016 121 953
- -: "Honda GL1800 Service Manual 2002", 1 January 2002 (2002-01-01), XP093245766, Retrieved from the Internet <URL:https://www.carlsalter.com/mcpdf/Honda%20GL1800%20Service%20Manual%202002.pdf> [retrieved on 20250203]

## Description

### Technical field

The present invention relates to a straddled vehicle.

### Prior art

There has been conventionally known a type of straddled vehicle including a storage box installed inside a tank shroud (see Japan Laid-open Patent Application Publication No. 2015-83395). A lid portion, provided for covering an opening of the storage box, is supported by and pivotable about a hinge portion provided outside the opening in a vehicle width direction.

In the conventional straddled vehicle, the opening of the storage box is opened upward, while the hinge portion is provided outside the opening in the vehicle width direction. Because of this, when opened and closed, the lid portion tends to perform an upward moving action by a large amount.
US-A-5,303,795 and DE-A-102019132454 disclose a straddled vehicle. The Honda GL1800 Service Manual 2002 shows a straddled vehicle with a storage box.

### Description of the invention

It is an object of the present invention to achieve the following in a straddled vehicle including a storage box disposed below a turning trajectory of a handle: limiting an upward moving action of a lid portion of the storage box to as small an amount as possible.

A straddled vehicle according to an aspect of the present invention includes a head pipe, a steering device, a tank-like member, a power unit, a wheel, a seat, and a storage box. The steering device includes a handle. The steering device is turnably supported by the head pipe. The tank-like member includes a battery or a fuel tank. The tank-like member is disposed behind the head pipe. The power unit is disposed below the tank-like member and generates a drive force. The wheel is driven by the drive force. The seat is disposed behind the tank-like member. The storage box is disposed below a turning trajectory of the handle. The storage box includes a storage portion, a lid portion, and a shaft portion. The storage portion includes an opening for putting-in and taking-out of an item. The lid portion opens and closes the opening. The shaft portion pivotably supports the lid portion. The shaft portion is disposed below the storage portion and extends in a vehicle back-and-forth direction.

In the straddled vehicle according to the present invention, the shaft portion, supporting the lid portion of the storage box such that the lid portion is made pivotable, is disposed below the storage portion of the storage box and extends in the vehicle back-and-forth direction. Because of this, when the lid portion is opened and closed, an upward moving action of the lid portion can be limited to as small an amount as possible; hence, the lid portion can be effectively inhibited from interfering with the handle. Besides, a clearance between the handle and the lid portion can be made small. Furthermore, the shaft portion can be inhibited from protruding in the vehicle width direction in comparison with that provided outside the storage portion in the vehicle width direction; hence, the vehicle can be inhibited from being enlarged in the vehicle width direction.

The straddled vehicle may further include a side cover disposed lateral to the steering device. The storage box may further include a lid cover fixed to the lid portion outside the lid portion so as to be unitarily pivotable therewith. The lid cover may be disposed to form portion of the side cover in a vehicle side view. In this case, the storage box is unlikely to be recognized by a third party and can be thereby enhanced in anti-crime performance; simultaneously, the vehicle can be intended to be enhanced in external aesthetics. Besides, the lid portion can be protected by the lid cover.

The lid cover and the side cover may form a labyrinth structure. In this case, the storage portion can be enhanced in waterproof performance.

The lid cover may include an upper portion disposed above the lid portion. The upper portion of the lid cover may include a distal end portion in a vehicle width direction; besides, the distal end portion may form part of the labyrinth structure. The lid portion may include a distal end portion in the vehicle width direction; besides, the distal end portion of the lid portion may not overlap at least in part with the distal end portion of the upper portion of the lid cover in a vehicle plan view when the lid portion is closed. In this case, such a fluid as water can be further inhibited from intruding into the storage portion.

The straddled vehicle may further include a side cover disposed lateral to the steering device. The lid portion may be disposed to form part of the side cover in a vehicle side view. In this case, the storage box is unlikely to be recognized by a third party and can be thereby enhanced in anti-crime performance; simultaneously, the vehicle can be intended to be enhanced in external aesthetics.

The side cover may be disposed lateral to the tank-like member. In this case, the tank-like member can be protected by the side cover.

The storage box is disposed lateral to the head pipe. In this case, the vehicle can be inhibited from being enlarged in the vehicle width direction. Besides, it is made easy to reliably produce a space for the storage portion in the vehicle back-and-forth direction.

The lid portion may be configured to be opened outward in the vehicle width direction with respect to the storage portion. In this case, it is made easy to reliably produce a space for opening and closing the lid portion.

The opening may be opened upward and outward in the vehicle width direction. In this case, it is made easy to put/take the item in/out of the storage portion.

A dimension of the storage portion may be larger than a dimension of the storage portion in the vehicle up-and-down direction and a dimension of the storage portion in the vehicle width direction. In this case, the vehicle can be inhibited from being enlarged in the vehicle width direction, while a space for the storage portion can be reliably produced in the vehicle back-and-forth direction; hence, the item can be stably put in the storage portion even when the lid portion is not being closed.

The storage box may not overlap with the tank-like member in the vehicle side view. In this case, the vehicle can be inhibited from being enlarged in the vehicle width direction.

The storage box may overlap with the tank-like member in a vehicle front view. In this case, the vehicle can be inhibited from being enlarged in the vehicle width direction.

The storage box may further include an upper surface portion. The upper surface portion may extend from the storage portion in a direction of closing the lid portion and may be disposed below an upper end of the storage portion. In this case, a step is configured to be formed between the upper end of the storage portion and the upper surface portion; hence, it is made possible to inhibit such a fluid as water from intruding into the storage portion from the upper surface portion in the storage box.

The lid portion may include a canopy portion that covers the upper surface portion when the lid portion is closed. In this case, it is made possible to inhibit such a fluid as water from reaching the upper surface portion by the canopy portion even when the fluid intrudes into the storage box.

The upper surface portion may include a drain hole. In this case, it is made possible to inhibit such a fluid as water from intruding into the storage portion by the drain hole even when the fluid intrudes into the storage box and reaches the upper surface portion.

The storage box may further include an opposed portion. The opposed portion may be connected to the upper surface portion and may be opposed to a distal end portion of the canopy portion in the width direction when the lid portion is closed. The upper surface portion may include a drain hole disposed between the opposed portion and the storage portion. In this case, even when such a fluid as water intrudes into a gap between the canopy portion and the opposed portion and reaches the upper surface portion, it is made possible to inhibit the fluid from intruding into the storage portion by the drain hole.

The storage box may be disposed to a right side with respect to the head pipe. In this case, when the handle is configured to be locked in the vehicle while being turned left, it is made easy to open and close the lid portion in locking the handle.

The storage portion of the storage box may further include an attachment portion for attaching a power supply device. In this case, it is made possible to charge a portable information terminal or so forth inside the storage portion.

The straddled vehicle may further include an operating member for causing the lid portion to perform an opening action. The operating member may be disposed on an external surface of an inner side of the storage portion in a vehicle width direction. In this case, the operating member is disposed to be unlikely to be visible by a third party in comparison with that disposed on the external surface of the storage portion in the vehicle width direction; hence, the storage box can be enhanced in anti-crime performance. Besides, the operating member can be disposed near to the storage portion. Furthermore, the operating member can be inhibited from being complicated in structure in comparison with that disposed remote from the storage portion.

Overall, according to the present invention, it is made possible in a straddled vehicle, including a storage box disposed below a turning trajectory of a handle, to limit an upward moving action of a lid portion of the storage box to as small an amount as possible.

### Brief description of the invention

FIG. 1 is a side view of a straddled vehicle.
FIG. 2 is a front view of the straddled vehicle.
FIG. 3 is a plan view of a handle and the surroundings thereof.
FIG. 4 is a perspective view of a storage box.
FIG. 5 is a cross-sectional view of the storage box.
FIG. 6 is a partial perspective view of the storage box.
FIG. 7 is a partial perspective view of the storage box.
FIG. 8 is a diagram for explaining a labyrinth structure.
FIG. 9 is a view of an inner cover portion and the surroundings thereof seen from an inner side in a vehicle width direction.

### Embodiments of the invention

A preferred embodiment of a straddled vehicle according to an aspect of the present invention will be hereinafter explained with reference to drawings. It should be noted that in the following explanation, terms indicating such directions as "back and forth", "up and down", and "right and left" are explained based on directions seen from a rider in operation of a straddled vehicle 1. Therefore, a right-and-left direction is synonymous with a vehicle width direction. Besides, the term "outer side in a vehicle width direction" means a side far from the center of the straddled vehicle 1 in the vehicle width direction. By contrast, the term "inner side in the vehicle width direction" means a side near to the center of the straddled vehicle 1 in the vehicle width direction.

In the present specification, a condition of a constituent element extending in a vehicle back-and-forth direction (extending forward and/or rearward) is not limited to a condition of the constituent element extending in a direction orthogonal to a vehicle up-and-down direction and the vehicle width direction. The condition of the constituent element extending in the vehicle back-and-forth direction encompasses a condition of the constituent element extending to tilt relative to the vehicle up-and-down direction and/or the vehicle width direction. When described in detail, the vehicle back-and-forth direction encompasses a direction closer to the vehicle back-and-forth direction. The direction closer to the vehicle back-and-forth direction refers to, for instance, a direction that forms angles, the smaller of which is 45 degrees or less, together with the vehicle back-and-forth direction. The settings herein described are also true of the vehicle width direction (rightward and/or leftward directions) and the vehicle up-and-down direction (upward and/or downward directions).

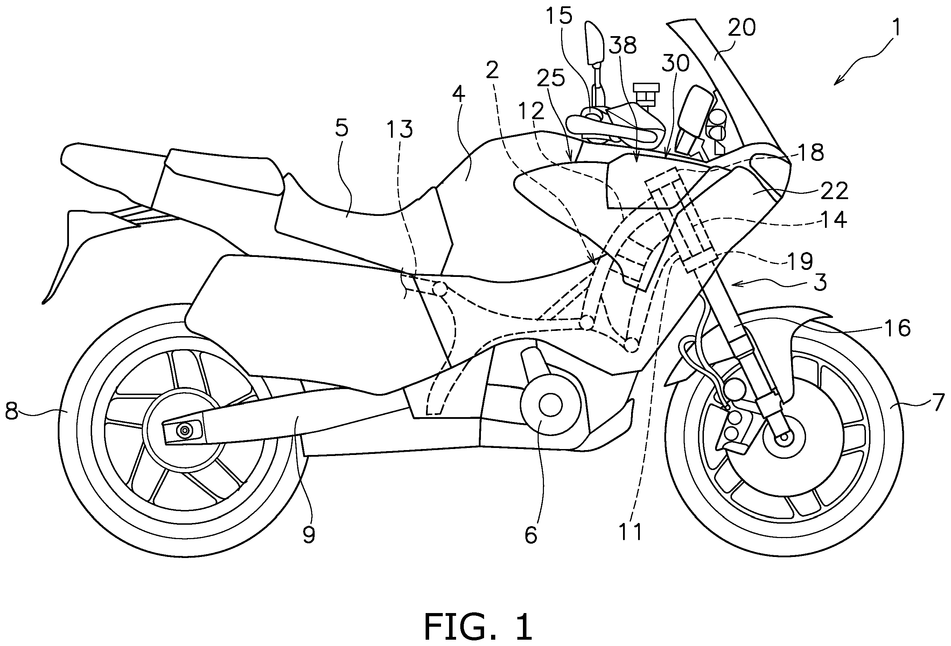

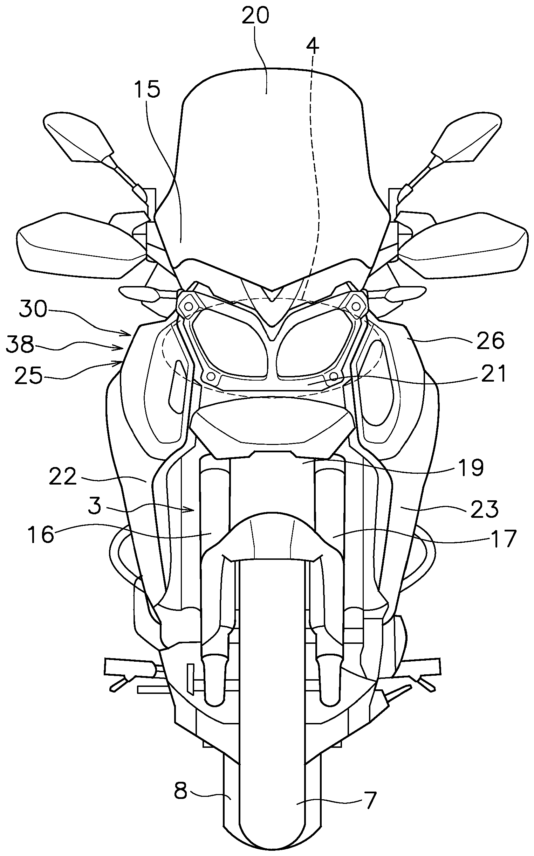

FIG. 1 is a side view of the straddled vehicle 1. FIG. 2 is a front view of the straddled vehicle 1. The straddled vehicle 1 includes a vehicle body frame 2, a steering device 3, a tank-like member 4, a seat 5, a power unit 6, a front wheel 7, and a rear wheel 8 (exemplary wheel).

The vehicle body frame 2 includes a head pipe 11, a main frame 12, and a rear frame 13. The main frame 12 is connected to the head pipe 11. The main frame 12 extends rearward from the head pipe 11. The rear frame 13 is connected to the main frame 12. The rear frame 13 extends rearward from the main frame 12.

The steering device 3 is supported by the head pipe 11 so as to be turnable. The steering device 3 supports the front wheel 7 such that the front wheel 7 is made rotatable. The steering device 3 includes a steering shaft 14, a handle 15, a right front fork 16, a left front fork 17, an upper bracket 18, and a lower bracket 19.

The steering shaft 14 is inserted into the head pipe 11. The handle 15 is disposed further on the upper side than the head pipe 11. The handle 15 is connected to the steering shaft 14. The handle 15 extends in the right-and-left direction. The right and left front forks 16 and 17 are connected to the steering shaft 14 through the upper and lower brackets 18 and 19. The right and left front forks 16 and 17 support the front wheel 7 such that the front wheel 7 is made rotatable.

The tank-like member 4 is disposed behind the head pipe 11. The tank-like member 4 is supported by the main frame 12. In the present preferred embodiment, the tank-like member 4 is a fuel tank. FIG. 2 shows the tank-like member 4 in a schematic manner.

The seat 5 is disposed behind the tank-like member 4. The seat 5 is disposed above the rear frame 13.

The power unit 6 is disposed below the tank-like member 4. The power unit 6 is supported by the main frame 12. The power unit 6 includes, for instance, an internal combustion engine. The power unit 6 generates a drive force. In the present preferred embodiment, the drive force generated by the power unit 6 is transferred to the rear wheel 8.

The rear wheel 8 is supported by the main frame 12 through a swing arm 9 supported by the main frame 12. The rear wheel 8 is supported by the swing arm 9 so as to be rotatable. The rear wheel 8 is driven by the drive force generated by the power unit 6. In the present preferred embodiment, the rear wheel 8 is an exemplary wheel.

The straddled vehicle 1 includes a wind shield 20, a front cowl 21, a right side cowl 22, a left side cowl 23, a right side cover 25 (exemplary side cover), and a left side cover 26. The wind shield 20 is disposed above the front cowl 21.

The front cowl 21 is disposed in front of the head pipe 11. The right side cowl 22 is disposed on the right of the head pipe 11. As shown in FIG. 1, the right side cowl 22 extends forward from the right side cover 25 in a vehicle side view. The right side cowl 22 extends downward from the right side cover 25 in the vehicle side view. The left side cowl 23 is disposed on the left of the head pipe 11. The left side cowl 23 extends forward from the left side cover 26 in the vehicle side view. The left side cowl 23 extends downward from the left side cover 26 in the vehicle side view.

The right side cover 25 is connected to the right side cowl 22. The right side cover 25 is disposed above the right side cowl 22. The right side cover 25 is disposed not only lateral to the steering device 3 but also on one side of the head pipe 11 in the vehicle width direction. The right side cover 25 is disposed on the right of the head pipe 11. The right side cover 25 overlaps with the head pipe 11 in the vehicle side view. The right side cover 25 is remote from the steering device 3 in the vehicle width direction. The right side cover 25 is disposed on the right of the steering device 3. The right side cover 25 overlaps with the steering shaft 14 of the steering device 3 in the vehicle side view. The right side cover 25 is fixed to the vehicle body frame 2 through a bracket (not shown in the drawings). The right side cover 25 may be fixed to the tank-like member 4.

The right side cover 25 extends in the vehicle back-and-forth direction. The right side cover 25 extends further rearward than the right side cowl 22. The right side cover 25 is disposed between the right side cowl 22 and the tank-like member 4 in the vehicle back-and-forth direction. The right side cover 25 is disposed lateral to the tank-like member 4. In the present preferred embodiment, a rear portion of the right side cover 25 is disposed laterally on the right of the tank-like member 4 and overlaps with the tank-like member 4 in the vehicle side view.

The left side cover 26 is connected to the left side cowl 23. The left side cover 26 is disposed above the left side cowl 23. The left side cover 26 is disposed not only lateral to the steering device 3 but also on the other side of the head pipe 11 in the vehicle width direction. The left side cover 26 is disposed on the left of the head pipe 11. The left side cover 26 overlaps with the head pipe 11 in the vehicle side view. The left side cover 26 is remote from the steering device 3 in the vehicle width direction. The left side cover 26 is disposed on the left of the steering device 3. The left side cover 26 overlaps with the steering shaft 14 of the steering device 3 in the vehicle side view.

The left side cover 26 extends in the vehicle back-and-forth direction. The left side cover 26 extends further rearward than the left side cowl 23. The left side cover 26 is disposed between the left side cowl 23 and the tank-like member 4 in the vehicle back-and-forth direction. The left side cover 26 is disposed lateral to the tank-like member 4. In the present preferred embodiment, a rear portion of the left side cover 26 is disposed laterally on the left of the tank-like member 4 and overlaps with the tank-like member 4 in the vehicle side view.

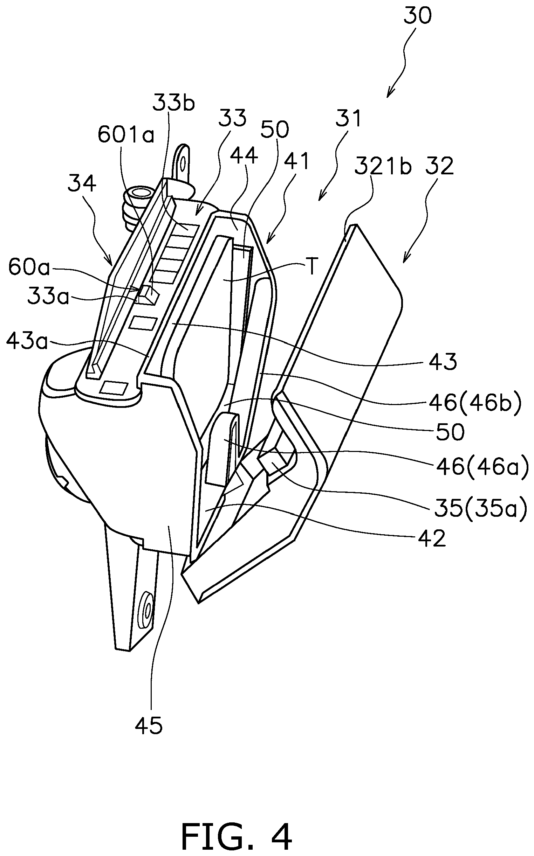

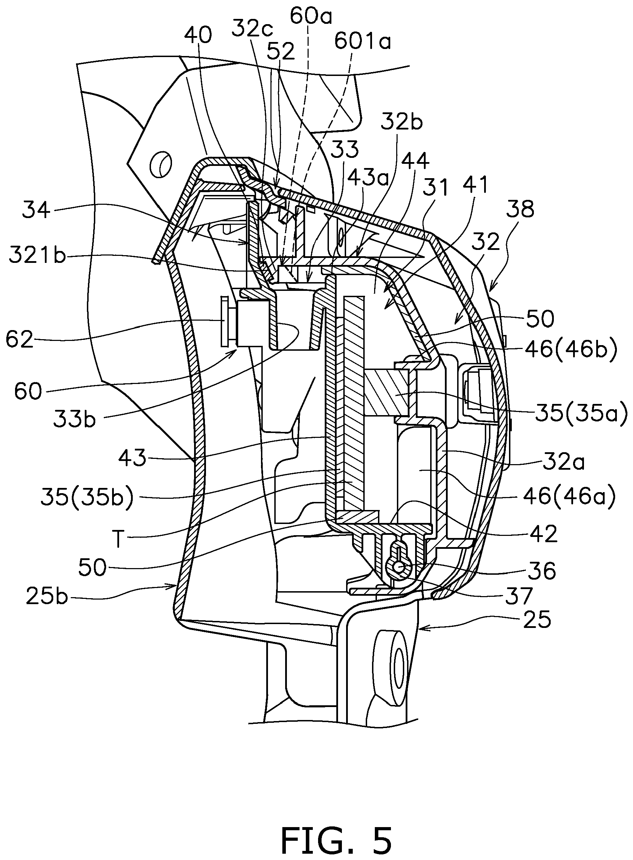

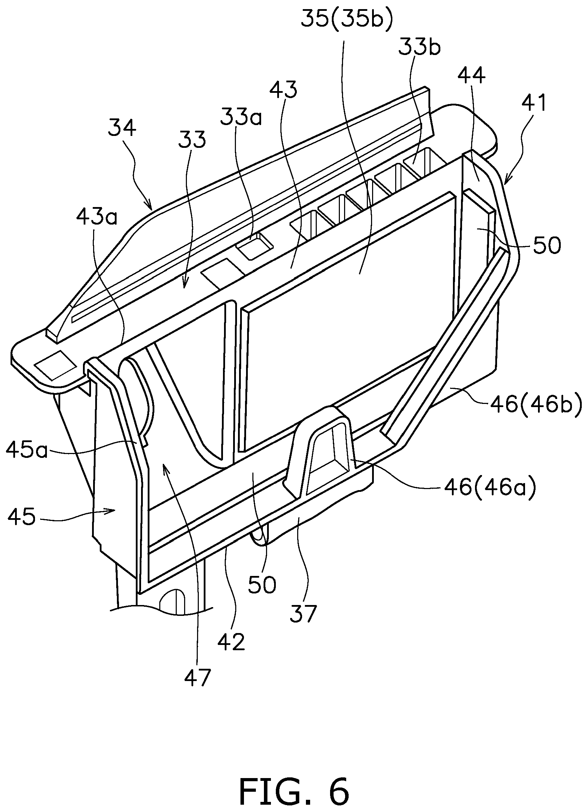

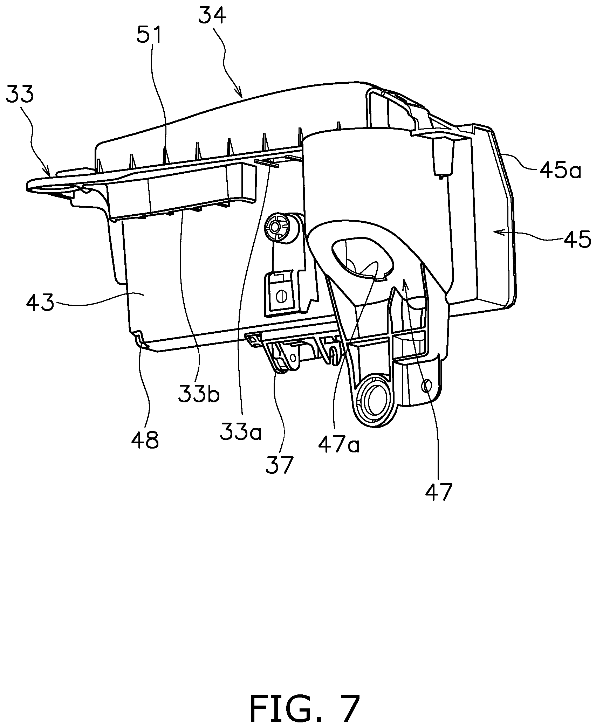

The straddled vehicle 1 includes a storage box 30. FIG. 4 is a perspective view of the storage box 30. FIG. 5 is a cross-sectional view of the storage box 30. FIGS. 6 and 7 are partial perspective views of the storage box 30. The storage box 30 is capable of storing one or more items. The storage box 30 is capable of storing, for instance, a portable information terminal T. The portable information terminal T is an exemplary item to be stored in the storage box 30.

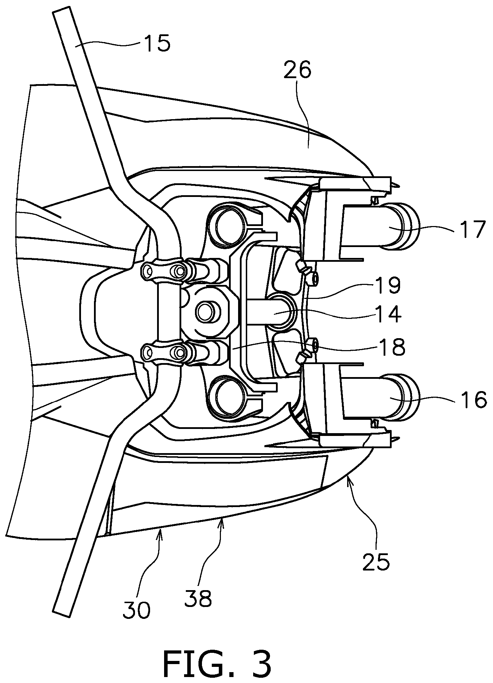

As shown in FIGS. 1 and 3, the storage box 30 is disposed below a turning trajectory of the handle 15. The storage box 30 is disposed further on the right side than the head pipe 11. The storage box 30 is disposed laterally on the right of the head pipe 11. The storage box 30 overlaps with the head pipe 11 in the vehicle side view.

The storage box 30 is disposed on the right of the steering device 3. The storage box 30 overlaps with the steering shaft 14 of the steering device 3 in the vehicle side view. The storage box 30 is disposed further on the upper side than the lower bracket 19. The storage box 30 is disposed inside the right side cover 25. The storage box 30 is disposed further on the front side than the tank-like member 4. The storage box 30 does not overlap with the tank-like member 4 in the vehicle side view. The storage box 30 overlaps with the tank-like member 4 in the vehicle front view.

The storage box 30 includes a storage portion 31, a lid portion 32, an upper surface portion 33, an opposed portion 34, at least one elastic member 35, a shaft portion 36, a shaft support portion 37, and a lid cover 38. It should be noted that in FIG. 4, the lid cover 38 is omitted in illustration.

The storage portion 31 is disposed on the right of the steering device 3. The storage portion 31 is fixed to a member configured not to be turned together with the steering device 3. The storage portion 31 is fixed to the right side cover 25. The storage portion 31 is capable of storing the portable information terminal T. The dimension of the storage portion 31 is greater in the vehicle back-and-forth direction than not only in the vehicle up-and-down direction but also in the vehicle width direction. The dimension of the storage portion 31 is greater in the vehicle up-and-down direction than in the vehicle width direction.

The storage portion 31 includes an opening 41, a bottom surface portion 42, an inner sidewall 43, a front surface portion 44, a rear surface portion 45, at least one restriction portion 46, an attachment portion 47, and a drain hole 48 (see FIG. 7).

The opening 41 serves as an opening for putting-in and taking-out of the item and is opened not only upward but also outward in the vehicle width direction. The opening 41 is defined by the inner sidewall 43, the front surface portion 44, and the rear surface portion 45.

When the lid portion 32 is opened, the storage portion 31 is uncovered upward. When the lid portion 32 is opened, the storage portion 31 is uncovered outward in the vehicle width direction except for at the restriction portion (or portions) 46. It should be noted that in the following explanation, the state that the lid portion 32 is opened will be referred to as "an opened state", whereas the state that the lid portion 32 is closed will be referred to as "a closed state". In other words, the opened state means that the opening 41 is opened (uncovered), whereas the closed state means that the opening 41 is closed (covered). FIG. 4 shows the opened state, whereas FIG. 5 shows the closed state.

The bottom surface portion 42 serves as a portion on which the portable information terminal T is put. The portable information terminal T is put on the bottom surface portion 42 such that the lengthwise direction thereof is matched with the vehicle back-and-forth direction. The bottom surface portion 42 is disposed lateral to the head pipe 11. The bottom surface portion 42 extends in a direction intersecting with the vehicle up-and-down direction. The dimension of the bottom surface portion 42 is greater in the vehicle back-and-forth direction than in the vehicle width direction. The bottom surface portion 42 tilts down forward. The bottom surface portion 42 extends to gradually approach to the head pipe 11 from rear to front. The front end of the bottom surface portion 42 is located further on the inner side than the rear end thereof in the vehicle width direction. The front end of the bottom surface portion 42 is located further on the rear side than that of the right side cover 25. The rear end of the bottom surface portion 42 is located further on the rear side than the head pipe 11. The rear end of the bottom surface portion 42 is located further on the front side than that of the right side cover 25.

The inner sidewall 43 extends in a direction intersecting with the vehicle width direction. The inner sidewall 43 extends in approximately both the vehicle up-and-down direction and the vehicle back-and-forth direction. The inner sidewall 43 is disposed between the front surface portion 44 and the rear surface portion 45 in the vehicle back-and-forth direction. The inner sidewall 43 is connected to the bottom surface portion 42, the front surface portion 44, and the rear surface portion 45. The inner sidewall 43 extends upward from a vehicle width directionally inner portion of the bottom surface portion 42. The inner sidewall 43 extends to gradually approach to the head pipe 11 from rear to front. The front end of the inner sidewall 43 is located further on the inner side than the rear end thereof in the vehicle width direction. In the closed state, the inner sidewall 43 is opposed to the lid portion 32 in the vehicle width direction.

The front surface portion 44 extends in a direction intersecting with the vehicle back-and-forth direction. The front surface portion 44 extends upward from the front end of the bottom surface portion 42. The front surface portion 44 extends outward from the front end of the inner sidewall 43 in the vehicle width direction.

The rear surface portion 45 extends in a direction intersecting with the vehicle back-and-forth direction. The rear surface portion 45 is opposed to the front surface portion 44 in the vehicle back-and-forth direction. The rear surface portion 45 extends upward from the rear end of the bottom surface portion 42. The rear surface portion 45 extends outward from the rear end of the inner sidewall 43 in the vehicle width direction. The rear surface portion 45 is located further on the rear side than the head pipe 11. The rear surface portion 45 is located further on the front side than the rear end of the right side cover 25. The rear surface portion 45 is disposed further on the rear side than the restriction portion (or portions) 46. The rear surface portion 45 defines part of the opening 41. The rear surface portion 45 includes an edge 45a extending not only downward but also outward in the vehicle width direction. The edge 45a is disposed on the upper end of a vehicle width directionally outer portion of the rear surface portion 45. The edge 45a defines part of the opening 41.

The restriction portion (or portions) 46 restricts the portable information terminal T, put on the bottom surface portion 42, from moving outward in the vehicle width direction. The restriction portion (or portions) 46 is disposed further on the outer side than the inner sidewall 43 in the vehicle width direction. The restriction portion (or portions) 46 is opposed to the inner sidewall 43 in the vehicle width direction. The portable information terminal T is stored in the storage portion 31 so as to stand between the inner sidewall 43 and the restriction portion (or portions) 46.

The one or more restriction portions 46 include a first restriction portion 46a and a second restriction portion 46b. The first restriction portion 46a extends upward from the bottom surface portion 42. The first restriction portion 46a is disposed further on the lower side than the upper end of the inner sidewall 43. The second restriction portion 46b is disposed remote from the first restriction portion 46a in the vehicle back-and-forth direction. The second restriction portion 46b is disposed further on the front side than the first restriction portion 46a. The second restriction portion 46b extends upward from the bottom surface portion 42 and is connected to the front surface portion 44. The upper edge of the second restriction portion 46b extends not only rearward but also downward.

The attachment portion 47 serves as a portion for attaching a power supply device (not shown in the drawings). The power supply device is, for instance, a power socket provided as an accessory socket. The power supply device may connect therethrough the portable information terminal T and an electronic device installed in the straddled vehicle 1 such that intercommunication of data is enabled between the portable information terminal T and the electronic device. The attachment portion 47 is formed by bulging a rear portion of the inner sidewall 43 inward in the vehicle width direction. The attachment portion 47 includes an attachment hole 47a to which the power supply device is attached. The attachment hole 47a is disposed further on the inner side than the bottom surface portion 42 in the vehicle width direction. The attachment hole 47a is disposed below the upper surface portion 33.

As shown in FIG. 7, the drain hole 48 is disposed in the bottom surface portion 42. The drain hole 48 is provided in the vehicle width directionally inner one of the front corners of the bottom surface portion 42.

Cushioning members 50 are disposed on the upper surface of the bottom surface portion 42, the rear surface of the front surface portion 44, the front surface of the rear surface portion 45, and the internal surface of the lid portion 32, respectively.

The lid portion 32 closes (covers) and opens (uncovers) the opening 41. In the closed state, the lid portion 32 covers the bottom surface portion 42, the inner sidewall 43, the front surface portion 44, the rear surface portion 45, and the upper surface portion 33. The lid portion 32 is supported by the shaft portion 36 so as to be pivotable. The lid portion 32 is pivotable between an opened position shown in FIG. 4 and a closed position shown in FIG. 5. The lid portion 32 is set to be pivotable in an angular range of approximately 20° to 30°. It should be noted that the lid portion 32 is preferably pivotable in an angular range of 45° or less. The lid portion 32 is pivotable with respect to the right side cover 25. The lid portion 32 is configured to be opened outward in the vehicle width direction with respect to the storage portion 31. The lid portion 32 is configured to be opened outward in the vehicle width direction with respect to the inner sidewall 43. When moved from the closed position to the opened position, the lid portion 32 is opened outward in the vehicle width direction. As shown in FIGS. 4 and 5, an upper portion of the lid portion 32 is located further on the outer side in the vehicle width direction in the opened position than in the closed position. The lid portion 32 is biased to the opened position by a hinge spring (not shown in the drawings) disposed below the storage portion 31.

As shown in FIG. 5, the lid portion 32 includes a wall portion 32a, a canopy portion 32b, and an engaged portion 32c. In the closed state, the wall portion 32a extends in a direction intersecting with the vehicle width direction. In the closed state, the wall portion 32a is opposed to the inner sidewall 43 in the vehicle width direction. The canopy portion 32b extends inward from the upper end of the wall portion 32a in the vehicle width direction. In the closed state, the canopy portion 32b covers the upper surface portion 33. In the closed state, a distal end portion 321b, which is a vehicle width directionally inner end portion of the canopy portion 32b, is located further on the inner side than the inner sidewall 43 in the vehicle width direction. The engaged portion 32c is provided on the lower surface of the distal end portion 321b of the canopy portion 32b. The engaged portion 32c extends downward from the lower surface of the distal end portion 321b of the canopy portion 32b. The engaged portion 32c is shaped to recess from the inner side to the outer side in the vehicle width direction.

The upper surface portion 33 extends in a direction intersecting with the vehicle up-and-down direction. The upper surface portion 33 extends from the storage portion 31 in a direction of closing the lid portion 32. The upper surface portion 33 extends inward from the storage portion 31 in the vehicle width direction. In the vicinity of the upper end of the inner sidewall 43 of the storage portion 31, the upper surface portion 33 extends inward from the inner sidewall 43 in the vehicle width direction. The upper surface portion 33 is disposed further on the lower side than the aforementioned upper end (43a) of the inner sidewall 43 (exemplary upper end of a storage portion). The upper end 43a of the inner sidewall 43 protrudes further upward than the upper surface portion 33. Because of this, a step is provided between the upper surface portion 33 and the inner sidewall 43. In the closed state, the upper surface portion 33 is disposed below the canopy portion 32b so as to be covered therewith.

The upper surface portion 33 includes a through hole 33a and a plurality of drain holes 33b. The through hole 33a and the plural drain holes 33b are disposed between the opposed portion 34 and the storage portion 31. The through hole 33a and the plural drain holes 33b are disposed between the opposed portion 34 and the inner sidewall 43. The through hole 33a and the plural drain holes 33b penetrate the upper surface portion 33 in the vehicle up-and-down direction. The through hole 33a is provided in the vicinity of the middle of the upper surface portion 33 in the vehicle back-and-forth direction. The plural drain holes 33b are provided on the front side and the rear side of the through hole 33a.

The opposed portion 34 is connected to the upper surface portion 33. The opposed portion 34 extends upward from the upper surface portion 33. The opposed portion 34 is disposed further on the inner side than the plural drain holes 33b in the vehicle width direction. In the closed state, the opposed portion 34 is opposed to the distal end portion 321b of the canopy portion 32b. In the closed state, a seal member 40 is disposed between the opposed portion 34 and the distal end portion 321b of the canopy portion 32b so as to seal a gap produced therebetween. The seal member 40 is fixed to the opposed portion 34. The seal member 40 may be fixed to the distal end portion 321b of the canopy portion 32b. As shown in FIG. 7, a plurality of ribs 51 are provided on the inner side of the opposed portion 34 in the vehicle width direction so as to be connected to the upper surface portion 33 and the opposed portion 34.

In the closed state, the portable information terminal T is pressed by the elastic member (or members) 35 in the thickness direction thereof (herein corresponding to the vehicle width direction). Accordingly, the portable information terminal T is retained in the storage portion 31.

The one or more elastic members 35 include a first elastic member 35a and a second elastic member 35b. The first elastic member 35a is disposed on the lid portion 32. The first elastic member 35a is fixed to the internal surface of the wall portion 32a of the lid portion 32. In the closed state, the first elastic member 35a is disposed above the first restriction portion 46a. The first elastic member 35a, at least in part, is disposed at an identical height to the center of the inner sidewall 43 in the vehicle up-and-down direction. The second elastic member 35b is disposed on the inner sidewall 43. The second elastic member 35b is fixed to the surface of the inner sidewall 43 on the outer side of the inner sidewall 43 in the vehicle width direction. In the closed state, the second elastic member 35b is opposed to the first elastic member 35a in the vehicle width direction.

The shaft portion 36 supports the lid portion 32 such that the lid portion 32 is made pivotable. The shaft portion 36 extends in the vehicle back-and-forth direction. In the present preferred embodiment, the shaft portion 36 extends to tilt with respect to not only the vehicle up-and-down direction but also the vehicle width direction. The shaft portion 36 extends from the vehicle rear side to the vehicle front side so as to tilt down to the inner side in the vehicle width direction. It should be noted that the shaft portion 36 may extend in parallel to the vehicle back-and-forth direction, or alternatively, may extend to tilt with respect to either the vehicle up-and-down direction or the vehicle width direction.

The shaft portion 36 is disposed below the storage portion 31. The shaft portion 36 overlaps with the storage portion 31 in a vehicle plan view. The shaft portion 36 is supported by the shaft support portion 37. The shaft portion 36 is disposed further on the outer side than the inner sidewall 43 in the vehicle width direction.

The shaft support portion 37 is disposed below the storage portion 31. The shaft support portion 37 is provided on a lower portion of the bottom surface portion 42.

The lid cover 38 is fixed to the lid portion 32 outside the lid portion 32 so as to be unitarily pivotable therewith. For example, at least one resin rivet is inserted into the lid cover 38 from the inside of the lid portion 32, whereby the lid cover 38 is fixed to the lid portion 32. The lid cover 38 is disposed to compose part of the right side cover 25 in the vehicle side view. For example, the lid cover 38 is disposed to be flush with the right side cover 25 at a portion thereof adjoining the right side cover 25.

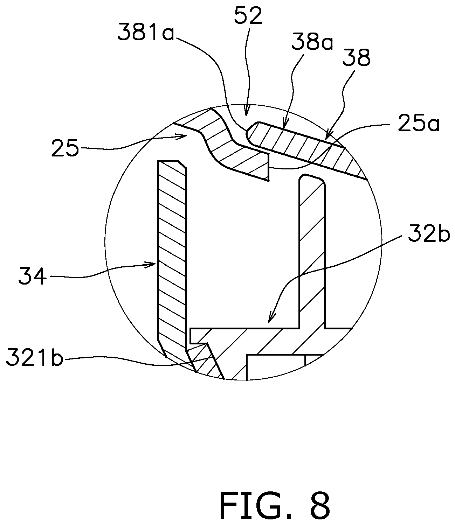

As shown in FIG. 5, a labyrinth structure 52 is formed by the lid cover 38 and the right side cover 25. When described in detail, as shown closeup in FIG. 8, the lid cover 38 includes an upper portion 38a disposed above the canopy portion 32b of the lid portion 32. The right side cover 25 includes a side edge 25a disposed above the canopy portion 32b of the lid portion 32. A distal end portion 381a, which is a vehicle width directional end portion of the upper portion 38a of the lid cover 38, forms part of the labyrinth structure 52. The labyrinth structure 52 is formed by the side edge 25a and the distal end portion 381a of the upper portion 38a of the lid cover 38. The side edge 25a overlaps with the distal end portion 381a of the upper portion 38a of the lid cover 38 in the vehicle plan view. The side edge 25a is disposed below the distal end portion 381a of the upper portion 38a of the lid cover 38.

In the closed state, the distal end portion 321b, which is the vehicle width directionally distal end portion of the lid portion 32, does not overlap at least in part with the distal end portion 381a of the upper portion 38a of the lid cover 38 in the vehicle plan view. In FIG. 8, the distal end portion 321b, which is the vehicle width directionally distal end portion of the lid portion 32, is located further on the inner side than the distal end portion 381a of the upper portion 38a of the lid cover 38 and the side edge 25a of the right side cover 25 in the vehicle width direction.

The straddled vehicle 1 includes an opening and closing mechanism 60 and an operating member 62. When the lid portion 32 is moved to the closed position, the opening and closing mechanism 60 keeps the lid portion 32 in the closed state. The opening and closing mechanism 60 releases the closed state in response to operating the operating member 62.

As shown in FIGS. 4 and 5, the opening and closing mechanism 60 includes an engaging protrusion 60a. The engaging protrusion 60a is disposed to be protrusible and retractable with respect to the through hole 33a. The engaging protrusion 60a is biased upward by an urging member (not shown in the drawings). In the closed state, the engaging protrusion 60a protrudes upward from the through hole 33a so as to engage with the engaged portion 32c of the lid portion 32. Accordingly, the lid portion 32 is kept in the closed state, while being restricted from moving to the opened position. On the other hand, when the operating member 62 is operated, the engaging protrusion 60a is pulled into the through hole 33a. When the operating member 62 is operated in the closed state, the engaged portion 32c of the lid portion 32 is released from being engaged with the engaging protrusion 60a. Accordingly, the lid portion 32 is moved from the closed position to the opened position.

The engaging protrusion 60a includes a slope 601a. The slope 601a is provided on the upper surface of the engaging protrusion 60a. The slope 601a tilts down to the outer side in the vehicle width direction. When the lid portion 32 is moved from the opened position to the closed position, the distal end portion 321b of the canopy portion 32b of the lid portion 32 contacts with the slope 601a from the outer side in the vehicle width direction. Accordingly, the engaging protrusion 60a is pressed downward to be pulled into the through hole 33a. When the engaged portion 32c of the lid portion 32 gets over the engaging protrusion 60a to the inner side in the vehicle width direction, the engaging protrusion 60a engages with the engaged portion 32c of the lid portion 32, whereby the lid portion 32 is restricted from moving to the opened position.

The operating member 62 serves as a member to be operated for causing the lid portion 32 to perform an opening action. The operating member 62 is a member to be operated for pulling the engaging protrusion 60a into the through hole 33a. The operating member 62 is coupled to the opening and closing mechanism 60. The operating member 62 is a member operable by pressing. The operating member 62 is, for instance, a push button pressable from the inner side to the outer side in the vehicle width direction. The operating member 62 is disposed on the external surface of a vehicle width directionally inner portion of the storage portion 31.

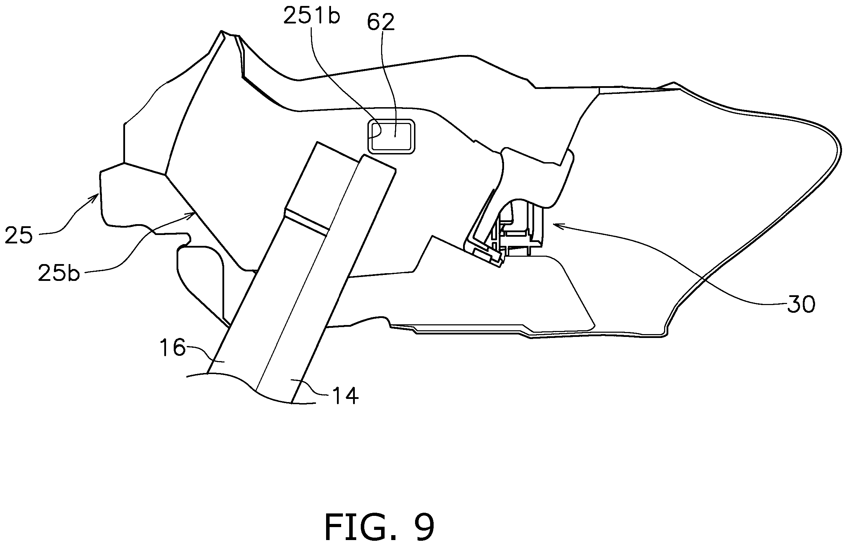

Here, the right side cover 25 includes an inner cover portion 25b. The inner cover portion 25b covers the external surface of a vehicle width directionally inner portion of the storage box 30. As shown in FIG. 9, the inner cover portion 25b includes an opening 251b for operating the operating member 62 from the inner side of the inner cover portion 25b in the vehicle width direction. As shown in FIG. 5, the operating member 62 is disposed further on the outer side than the inner cover portion 25b in the vehicle width direction.

In the straddled vehicle 1 according to the present invention, the shaft portion 36, supporting the lid portion 32 of the storage box 30 such that the lid portion 32 is made rotatable, is disposed below the storage portion 31 of the storage box 30 and extends in the vehicle back-and-forth direction. Because of this, when opened and closed, the lid portion 32 is enabled to be moved upward by as limited an amount as possible; hence, the lid portion 32 can be effectively inhibited from interfering with the handle 15. Besides, a clearance between the handle 15 and the lid portion 32 can be made small. Furthermore, the shaft portion 36 can be further inhibited from bulging in the vehicle width direction than when the shaft portion 36 is provided on the outer side of the storage portion 31 in the vehicle width direction; hence, the vehicle can be inhibited from being enlarged in the vehicle width direction.

The lid cover 38 is fixed to the lid portion 32 outside the lid portion 32 so as to be unitarily pivotable therewith; besides, the lid cover 38 is disposed to compose part of the right side cover 25 in the vehicle side view. Because of this, the storage box 30 is unlikely to be recognized by a third party and is thereby enhanced in anti-crime performance; simultaneously, the straddled vehicle 1 can be intended to be enhanced in external aesthetics. Besides, the lid portion 32 can be protected by the lid cover 38.

The opening 41 is opened not only upward but also outward in the vehicle width direction; hence, it is made possible to easily put/take the item such as the portable information terminal T in/out of the storage box 30. Simultaneously, it is made easy to reliably produce a space for opening and closing the lid portion 32 in the storage box 30; hence, when opened, the lid portion 32 can be inhibited from interfering with another member.

The step between the upper surface portion 33 and the inner sidewall 43 can inhibit a liquid such as water from intruding into the storage portion 31 from the upper surface portion 33. Likewise, the canopy portion 32b, the seal member 40, and the plural drain holes 33b can also inhibit the liquid such as water from intruding into the storage portion 31 from the upper surface portion 33. Even if intruding into the storage portion 31, the liquid such as water can be discharged to the outside through the drain hole 48.

One preferred embodiment of the present invention has been explained above. However, the present invention is not limited to the preferred embodiment described above, as the invention is defined by the claims.

The straddled vehicle 1 may be an electric straddled vehicle. In this case, the power unit 6 may include an electric motor, while the tank-like member 4 may include a battery. The battery may be stored in the tank-like member 4.

The storage box 30 may be disposed inside the left side cover 26. The storage portion 31 may be changed in configuration. The opening and closing mechanism 60 and the operating member 62 may be changed in configuration.

The lid cover 38 may be omitted. In this case, the lid portion 32 of the storage box 30 may be disposed to compose part of the right side cover 25 in the vehicle side view.

### Reference signs list

- 1: Straddled vehicle
- 3: Steering device
- 4: Tank-like member
- 5: Seat
- 6: Power unit
- 8: Rear wheel (exemplary wheel)
- 11: Head pipe
- 15: Handle
- 25: Right side cover (exemplary side cover)
- 30: Storage box
- 31: Storage portion
- 32: Lid portion
- 32b: Canopy portion
- 33: Upper surface portion
- 33b: Drain hole
- 34: Opposed portion
- 36: Shaft portion
- 38: Lid cover
- 41: Opening
- 47: Attachment portion
- 62: Operating member

## Claims

1. A straddled vehicle (1) comprising:
a head pipe (11);
a steering device (3) including a handle (15), the steering device (3) being turnably supported by the head pipe (11);
a tank-like member (4) including a battery or a fuel tank, the tank-like member (4) being disposed behind the head pipe (11);
a power unit (6) disposed below the tank-like member, the power unit (6) configured to generate a drive force;
a wheel (7, 8) driven by the drive force;
a seat (5) disposed behind the tank-like member (4); and
a storage box (30) disposed below a turning trajectory of the handle (15), the storage box (30) including a storage portion (31), a lid portion (32), and a shaft portion (36), the storage portion (31) including an opening (41) for putting-in and taking-out of an item, the lid portion (32) configured to open and close the opening (41), the shaft portion (36) configured to pivotably support the lid portion (32), wherein
the shaft portion (36) extends in a vehicle back-and-forth direction;
wherein said storage box (30) is disposed lateral to the head pipe (11), **characterized in that** the shaft portion (36) of the storage box is disposed below the storage portion (31).

2. The straddled vehicle according to claim 1, further comprising:
a side cover (25) disposed lateral to the steering device (3), wherein
the storage box (30) further includes a lid cover (38), the lid cover (38) fixed to the lid portion (32) outside the lid portion (32) so as to be unitarily pivotable therewith, and
the lid cover (38) is disposed to form part of the side cover (25) in a vehicle side view.

3. The straddled vehicle according to claim 2, wherein the lid cover (38) and the side cover (25) form a labyrinth structure (52).

4. The straddled vehicle according to claim 3, wherein
the lid cover (38) includes an upper portion (38a) disposed above the lid portion (32),
the upper portion (38a) of the lid cover (38) includes a first distal end portion (381a) in a vehicle width direction, the first distal end portion (381a) forming part of the labyrinth structure (52), and
the lid portion (32) includes a second distal end portion (321b) in the vehicle width direction, the second distal end portion (321b) not overlapping at least in part with the first distal end portion (381a) of the upper portion (38a) of the lid cover (38) in a vehicle plan view when the lid portion (32) is closed.

5. The straddled vehicle according to claim 1, further comprising:
a side cover (25) disposed lateral to the steering device (3), wherein
the lid portion (32) of the storage box (30) is disposed to form part of the side cover (25) in a vehicle side view.

6. The straddled vehicle according to any one of claims 2 to 4, wherein the side cover (25) is disposed lateral to the tank-like member (4).

7. The straddled vehicle according to any one of claims 1 to 4, wherein the lid portion (32) is configured to be opened outward in a vehicle width direction with respect to the storage portion (30).

8. The straddled vehicle according to any one of claims 1 to 4, wherein the opening (41) is opened upward and outward in a vehicle width direction.

9. The straddled vehicle according to any one of claims 1 to 4, wherein a dimension of the storage portion (31) in the vehicle back-and-forth direction is larger than a dimension of the storage portion (31) in a vehicle up-and-down direction and a dimension of the storage portion (31) in a vehicle width direction.

10. The straddled vehicle according to any one of claims 1 to 4, wherein the storage box (30) does not overlap with the tank-like member (4) in a vehicle side view.

11. The straddled vehicle according to claim 9, wherein the storage box (30) overlaps with the tank-like (4) member in a vehicle front view.

12. The straddled vehicle according to any one of claims 1 to 4, wherein the storage box (30) further includes an upper surface portion (33), the upper surface portion (33) extending from the storage portion (31) in a direction of closing the lid portion (32), the upper surface portion (33) being disposed below an upper end of the storage portion (31).

13. The straddled vehicle according to claim 12, wherein the lid portion includes a canopy portion (32b), the canopy portion (32b) covering the upper surface portion (33) when the lid portion (32) is closed.

14. The straddled vehicle according to claim 13, wherein the upper surface portion (33) includes a drain hole (33b).

15. The straddled vehicle according to claim 13, wherein
the storage box (30) further includes an opposed portion (34), the opposed portion (34) being connected to the upper surface portion (33), the opposed portion (34) being opposed to a distal end portion (321b) of the canopy portion (32b) in a vehicle width direction when the lid portion (32) is closed, and
the upper surface portion (33) includes a drain hole (33b), the drain hole (33b) being disposed between the opposed portion (34) and the storage portion (31).

16. The straddled vehicle according to any one of claims 1 to 4, wherein the storage box (30) is disposed to a right side with respect to the head pipe (11).

17. The straddled vehicle according to any one of claims 1 to 4, wherein the storage portion (31) of the storage box (30) further includes an attachment portion (47) for attaching a power supply device.

18. The straddled vehicle according to any one of claims 1 to 4, further comprising:
an operating member (62) for causing the lid portion (32) to perform an opening action, wherein the operating member (62) is disposed on an external surface of an inner side of the storage portion (31) in a vehicle width direction.

## Patentansprüche

1. Grätschsitz-Fahrzeug (1), mit:
einem Hauptrohr (11);
einer Lenkvorrichtung (3) mit einem Griff (15), wobei die Lenkvorrichtung (3) schwenkbar an dem Hauptrohr (11) angebracht ist;
einem tankartigen Element (4) mit einer Batterie oder einem Kraftstofftank, wobei das tankartige Element (4) hinter dem Hauptrohr (11) angeordnet ist;
einer unterhalb des tankartigen Elements angeordnete Antriebseinheit (6), wobei die Antriebseinheit (6) ausgebildet ist, eine Antriebskraft zu erzeugen;
einem durch die Antriebskraft angetriebenes Rad (7, 8);
einer hinter dem tankartigen Element (4) angeordneten Sattelstütze (5); und
einem unterhalb einer Drehbahn des Griffs (15) angeordneten Aufbewahrungsbehälter (30), wobei der Aufbewahrungsbehälter (30) einen Aufbewahrungsabschnitt (31), einen Deckelabschnitt (32) und einen Schaftabschnitt (36) aufweist, wobei der Aufbewahrungsabschnitt (31) eine Öffnung (41) zum Einlegen und Entnehmen eines Gegenstands aufweist, wobei der Deckelabschnitt (32) ausgebildet ist, die Öffnung (41) zu öffnen und zu schließen, und wobei der Schaftabschnitt (36) ausgebildet ist, den Deckelabschnitt (32) schwenkbar zu halten, wobei der Schaftabschnitt (36) sich in einer Fahrzeug-Vorwärts-Rückwärts-Richtung erstreckt;
wobei der Aufbewahrungsbehälter (30) seitlich zu dem Hauptrohr (11) angeordnet ist,
**dadurch gekennzeichnet, dass**
der Schaftabschnitt (36) des Aufbewahrungsbehälters unterhalb des Aufbewahrungsabschnitts (31) angeordnet ist.

2. Grätschsitz-Fahrzeug gemäß Anspruch 1, ferner mit:
einer seitlichen Abdeckung (25), die seitlich der Lenkeinrichtung (3) angeordnet ist, wobei der Aufbewahrungsbehälter (30) ferner einen Deckelabdeckung (38) aufweist, wobei die Deckelabdeckung (38) an dem Deckelabschnitt (32) außerhalb des Deckelabschnitts (32) befestigt ist, so dass sie als Einheit damit schwenkbar ist, und
die Deckelabdeckung (38) so angeordnet ist, dass sie in einer Fahrzeugseitenansicht einen Teil der Seitenabdeckung (25) bildet.

3. Grätschsitz-Fahrzeug gemäß Anspruch 2, wobei die Deckelabdeckung (38) und die Seitenabdeckung (25) eine Labyrinthstruktur (52) bilden.

4. Grätschsitz-Fahrzeug gemäß Anspruch 3, wobei
die Deckelabdeckung (38) einen oberen Abschnitt (38a) aufweist, der über dem Deckelabschnitt (32) angeordnet ist,
der obere Abschnitt (38a) der Abdeckung (38) einen ersten distalen Endabschnitt (381a) in Fahrzeugbreitenrichtung aufweist, wobei der erste distale Endabschnitt (381a) einen Teil der Labyrinthstruktur (52) bildet, und
der Deckelabschnitt (32) einen zweiten distalen Endabschnitt (321b) in Fahrzeugbreitenrichtung aufweist, wobei der zweite distale Endabschnitt (321b) zumindest teilweise nicht mit dem ersten distalen Endabschnitt (381a) des oberen Abschnitts (38a) der Deckelabdeckung (38) in einer Fahrzeugdraufsicht überlappt, wenn der Deckelabschnitt (32) geschlossen ist.

5. Grätschsitz-Fahrzeug gemäß Anspruch 1, ferner mit:
eine seitliche Abdeckung (25), die seitlich der Lenkvorrichtung (3) angeordnet ist, wobei der Deckelabschnitt (32) des Aufbewahrungsbehälters (30) so angeordnet ist, dass er in einer Fahrzeugseitenansicht einen Teil der seitlichen Abdeckung (25) bildet.

6. Grätschsitz-Fahrzeug gemäß einem der Ansprüche 2 bis 4, wobei die Seitenabdeckung (25) seitlich des tankartigen Elements (4) angeordnet ist.

7. Grätschsitz-Fahrzeug gemäß einem der Ansprüche 1 bis 4, wobei der Deckelabschnitt (32) so ausgebildet ist, dass er in Fahrzeugbreitenrichtung in Bezug auf den Aufbewahrungsbehälter (30) nach außen geöffnet werden kann.

8. Grätschsitz-Fahrzeug gemäß einem der Ansprüche 1 bis 4, wobei die Öffnung (41) in Fahrzeugbreitenrichtung nach oben und außen zu öffnen ist.

9. Grätschsitz-Fahrzeug gemäß einem der Ansprüche 1 bis 4, wobei eine Abmessung des Aufbewahrungsabschnitts (31) in der Fahrzeug-Vorwärts-Rückwärts-Richtung größer ist als eine Abmessung des Aufbewahrungsabschnitts (31) in einer Fahrzeug-Auf-Ab-Richtung und eine Abmessung des Aufbewahrungsabschnitts (31) in einer Fahrzeugbreitenrichtung.

10. Grätschsitz-Fahrzeug gemäß einem der Ansprüche 1 bis 4, wobei der Aufbewahrungsbehälter (30) in einer Fahrzeugseitenansicht nicht mit dem tankartigen Element (4) überlappt.

11. Grätschsitz-Fahrzeug gemäß Anspruch 9, wobei der Aufbewahrungsbehälter (30) in einer Fahrzeugvorderansicht mit dem tankartigen Element (4) überlappt.

12. Grätschsitz-Fahrzeug gemäß einem der Ansprüche 1 bis 4, wobei der Aufbewahrungsbehälter (30) ferner einen oberen Oberflächenabschnitt (33) aufweist, wobei sich der obere Oberflächenabschnitt (33) von dem Aufbewahrungsabschnitt (31) in einer Schließrichtung des Deckelabschnitts (32) erstreckt, wobei der obere Oberflächenabschnitt (33) unterhalb eines oberen Endes des Aufbewahrungsabschnitts (31) angeordnet ist.

13. Grätschsitz-Fahrzeug gemäß Anspruch 12, wobei der Deckelabschnitt einen Kappenabschnitt (32b) aufweist, wobei der Kappenabschnitt (32b) den oberen Oberflächenabschnitt (33) abdeckt, wenn der Deckelabschnitt (32) geschlossen ist.

14. Grätschsitz-Fahrzeug nach Anspruch 13, wobei der obere Oberflächenabschnitt (33) eine Ablauföffnung (331) aufweist.

15. Grätschsitz-Fahrzeug nach Anspruch 13, wobei
der Aufbewahrungsbehälter (30) ferner einen gegenüberliegenden Abschnitt (34) aufweist, wobei der gegenüberliegende Abschnitt (34) mit dem oberen Oberflächenabschnitt (33) verbunden ist, wobei der gegenüberliegende Abschnitt (34) einem distalen Endabschnitt (321b) des Kappenabschnitts (32b) in Fahrzeugbreitenrichtung gegenüberliegt, wenn der Deckelabschnitt (32) geschlossen ist,
und
wobei der obere Oberflächenabschnitt (33) eine Ablauföffnung (33b) aufweist, wobei die Ablauföffnung (33b) zwischen dem gegenüberliegenden Abschnitt (34) und dem Aufbewahrungsabschnitt (31) angeordnet ist.

16. Grätschsitz-Fahrzeug gemäß einem der Ansprüche 1 bis 4, wobei der Aufbewahrungsbehälter (30) auf der rechten Seite in Bezug auf das Hauptrohr (11) angeordnet ist.

17. Grätschsitz-Fahrzeug gemäß einem der Ansprüche 1 bis 4, wobei der Aufbewahrungsabschnitt (31) des Aufbewahrungsbehälters (30) ferner einen Befestigungsabschnitt (47) zum Befestigen einer Stromversorgungseinrichtung aufweist.

18. Grätschsitz-Fahrzeug gemäß einem der Ansprüche 1 bis 4, das ferner umfasst:
ein Betätigungselement (62), um den Deckelabschnitt (32) zu einer Öffnungsbewegung zu veranlassen, wobei das Betätigungselement (62) in Fahrzeugbreitenrichtung an einer Außenfläche einer Innenseite des Aufbewahrungsabschnitts (31) angeordnet ist.

## Revendications

1. Véhicule à enfourcher (1) comprenant :
un tube de tête (11) ;
un dispositif de direction (3) incluant un guidon (15), le dispositif de direction (3) étant supporté de manière tournante par le tube de tête (11) ;
un élément de type réservoir (4) incluant une batterie ou un réservoir de carburant, l'élément de type réservoir (4) étant disposé derrière le tube de tête (11) ;
un groupe moteur (6) disposé sous l'élément de type réservoir, le groupe moteur (6) étant configuré pour générer une force d'entraînement ;
une roue (7, 8) entraînée par la force d'entraînement ;
un siège (5) disposé derrière l'élément de type réservoir (4) ; et
un coffre de stockage (30) disposé sous une trajectoire de rotation du guidon (15), le coffre de stockage (30) incluant une portion de stockage (31), une portion de couvercle (32) et une portion d'axe (36), la portion de stockage (31) incluant une ouverture (41) pour insérer et retirer un objet, la portion de couvercle (32) étant configurée pour ouvrir et fermer l'ouverture (41), la portion d'axe (36) étant configurée pour supporter la portion de couvercle (32) de manière pivotante,
dans lequel la portion d'axe (36) s'étend en direction avant-arrière du véhicule,
dans lequel ledit coffre de stockage (30) est disposé latéralement par rapport au tube de tête (11),
**caractérisé en ce que** la portion d'axe (36) du coffre de stockage est disposée sous la portion de stockage (31).

2. Véhicule à enfourcher selon la revendication 1, comprenant en outre :
un carénage latéral (25) disposé latéralement par rapport au dispositif de direction (3), dans lequel
le coffre de stockage (30) inclut en outre un carénage de couvercle (38), le carénage de couvercle (38) étant fixé à la portion de couvercle (32) à l'extérieur de la portion de couvercle (32) de manière à pouvoir pivoter conjointement de manière unitaire, et
le carénage de couvercle (38) est disposé pour faire partie du carénage latéral (25) en vue latérale du véhicule.

3. Véhicule à enfourcher selon la revendication 2, dans lequel le carénage de couvercle (38) et le carénage latéral (25) forment une structure en labyrinthe (52).

4. Véhicule à enfourcher selon la revendication 3, dans lequel
le carénage de couvercle (38) inclut une portion supérieure (38a) disposée au-dessus de la portion de couvercle (32),
la portion supérieure (38a) du carénage de couvercle (38) inclut une première portion d'extrémité distale (381a) en direction de la largeur du véhicule, la première portion d'extrémité distale (381a) faisant partie de la structure en labyrinthe (52), et
la portion de couvercle (32) inclut une deuxième portion d'extrémité distale (321b) en direction de la largeur du véhicule, la deuxième portion d'extrémité distale (321b) ne chevauchant pas au moins en partie la première portion d'extrémité distale (381a) de la portion supérieure (38a) du carénage de couvercle (38) en vue en plan du véhicule quand la portion de couvercle (32) est fermée.

5. Véhicule à enfourcher selon la revendication 1, comprenant en outre :
un carénage latéral (25) disposé latéralement par rapport au dispositif de direction (3), dans lequel
la portion de couvercle (32) du coffre de stockage (30) est disposée pour faire partie du carénage latéral (25) en vue latérale du véhicule.

6. Véhicule à enfourcher selon l'une quelconque des revendications 2 à 4, dans lequel le carénage latéral (25) est disposé latéralement par rapport à l'élément de type réservoir (4).

7. Véhicule à enfourcher selon l'une quelconque des revendications 1 à 4, dans lequel la portion de couvercle (32) est configurée pour être ouverte vers l'extérieur en direction de la largeur du véhicule par rapport à la portion de stockage (30).

8. Véhicule à enfourcher selon l'une quelconque des revendications 1 à 4, dans lequel l'ouverture (41) est ouverte vers le haut et vers l'extérieur en direction de la largeur du véhicule.

9. Véhicule à enfourcher selon l'une quelconque des revendications 1 à 4, dans lequel une dimension de la portion de stockage (31) en direction avant-arrière du véhicule est supérieure à une dimension de la portion de stockage (31) en direction haut-bas du véhicule et à une dimension de la portion de stockage (31) en direction de la largeur du véhicule.

10. Véhicule à enfourcher selon l'une quelconque des revendications 1 à 4, dans lequel le coffre de stockage (30) ne chevauche pas l'élément de type réservoir (4) en vue latérale du véhicule.

11. Véhicule à enfourcher selon la revendication 9, dans lequel le coffre de stockage (30) chevauche l'élément de type réservoir (4) en vue de face du véhicule.

12. Véhicule à enfourcher selon l'une quelconque des revendications 1 à 4, dans lequel le coffre de stockage (30) inclut en outre une portion de surface supérieure (33), la portion de surface supérieure (33) s'étendant à partir de la portion de stockage (31) en direction de fermeture de la portion de couvercle (32), la portion de surface supérieure (33) étant disposée sous une extrémité supérieure de la portion de stockage (31).

13. Véhicule à enfourcher selon la revendication 12, dans lequel la portion de couvercle inclut une portion de auvent (32b), la portion de auvent (32b) recouvrant la portion de surface supérieure (33) quand la portion de couvercle (32) est fermée.

14. Véhicule à enfourcher selon la revendication 13, dans lequel la portion de surface supérieure (33) inclut un trou de drainage (33b).

15. Véhicule à enfourcher selon la revendication 13, dans lequel
le coffre de stockage (30) inclut en outre une portion opposée (34), la portion opposée (34) étant connectée à la portion de surface supérieure (33), la portion opposée (34) étant opposée à une portion d'extrémité distale (321b) de la portion de auvent (32b) en direction de la largeur du véhicule quand la portion de couvercle (32) est fermée, et
la portion de surface supérieure (33) inclut un trou de drainage (33b), le trou de drainage (33b) étant disposé entre la portion opposée (34) et la portion de stockage (31).

16. Véhicule à enfourcher selon l'une quelconque des revendications 1 à 4, dans lequel le coffre de stockage (30) est disposé sur un côté droit par rapport au tube de tête (11).

17. Véhicule à enfourcher selon l'une quelconque des revendications 1 à 4, dans lequel la portion de stockage (31) du coffre de stockage (30) inclut en outre une portion d'attachement (47) pour attacher un dispositif d'alimentation électrique.

18. Véhicule à enfourcher selon l'une quelconque des revendications 1 à 4, comprenant en outre :
un élément d'actionnement (62) pour amener la portion de couvercle (32) à effectuer une action d'ouverture, dans lequel l'élément d'actionnement (62) est disposé sur une surface externe d'un côté interne de la portion de stockage (31) en direction de la largeur du véhicule.
